Europäisches Patentamt

European Patent Office

Office européen des brevets

(19)

(11) Veröffentlichungsnummer: **0 286 080 B1**

# EUROPÄISCHE PATENTSCHRIFT

(12)

(45) Veröffentlichungstag der Patentschrift: **06.05.92**

(51) Int. Cl.⁵: **B65G 47/82**

(21) Anmeldenummer: **88105536.2**

(22) Anmeldetag: **07.04.88**

(54) **Vorrichtung zum Steuern des Transportweges von Gegenständen.**

(30) Priorität: **07.04.87 DE 3711605**

(43) Veröffentlichungstag der Anmeldung:
**12.10.88 Patentblatt 88/41**

(45) Bekanntmachung des Hinweises auf die
Patenterteilung:
**06.05.92 Patentblatt 92/19**

(84) Benannte Vertragsstaaten:
**AT BE CH DE ES FR GB GR IT LI LU NL SE**

(56) Entgegenhaltungen:
EP-A- 0 019 117      DE-A- 1 431 848
DE-A- 3 415 133      DE-B- 1 182 597
GB-A- 384 884        GB-A- 458 676

(73) Patentinhaber: **Heuft, Bernhard**
**Im Sonnenwinkel 14**
**W-5475 Burgbrohl(DE)**

(72) Erfinder: **Heuft, Bernhard**
**Im Sonnenwinkel 14**
**W-5475 Burgbrohl(DE)**

(74) Vertreter: **Abitz, Walter, Dr.-Ing. et al**
**Abitz, Morf, Gritschneder, Freiherr von Witt-**
**genstein Postfach 86 01 09**
**W-8000 München 86(DE)**

EP 0 286 080 B1

## Beschreibung

Die Erfindung betrifft eine Vorrichtung zum Steuern des Transportweges von Gegenständen gemäß dem Oberbegriff des Anspruchs 1. Eine solche Vorrichtung ist aus DE-B-1 182 597 bekannt. Die Vorrichtung kann z.B. dazu verwendet werden, die Gegenstände oder das Stückgut mit einem bestimmten Merkmal oder einer bestimmten Merkmalskombination auf einem bestimmten der zweiten Förderbänder weiterzutransportieren. Die Steuerung der Ablenkelemente kann auch so erfolgen, daß die Gegenstände etwa gleichmäßig auf das bzw. die zweiten Transportbänder verteilt werden.

Eine weitere Vorrichtung ist aus EP-A 3 111, Figur 13, bekannt. Die Gegenstände werden dabei mittels einer Transportschnecke entlang einer von den Ablenkelementen aufgebauten Wand schräg über die zweiten Transportbänder gefördert. Durch Wegschwenken oder Zurückziehen einzelner der Ablenkelemente werden die Gegenstände für den Weitertransport auf einer bestimmten der zweiten Transportbänder freigegeben. Wegen der Verwendung einer Transportschnecke ist es erforderlich, daß die Gegenstände in einem der Steigung der Schnecke entsprechenden Abstand aufeinanderfolgen. Die Änderung der Bewegungsrichtung der Gegenstände beim Übergang von der Transportschnecke auf die zweiten Transportbänder ist abrupt, wodurch die Geschwindigkeit der zweiten Transportbänder begrenzt ist. Konstruktiv ergeben sich Schwierigkeiten dadurch, daß die Ablenkelemente in Transportrichtung der zweiten Transportbänder gegenüber der Transportschnecke angeordnet sind und daher zur Freigabe der Gegenstände nach oben weggezogen werden müssen. Insbesondere bei Getränkeflaschen besteht dabei die Gefahr, daß der Halsteil an den erst teilweise zurückgezogenen Ablenkelementen hängenbleibt und die Flasche dadurch umfällt.

Aus der DE-A 1 548 285 ist eine Vorrichtung zum Sortieren von Gegenständen bekannt, wobei die Gegenstände von einem Sternrad mittels Saugdüsen von einem ersten Transportband abgenommen und bei einem bestimmten, von mehreren zweiten Transportbändern wieder abgesetzt werden. Die Arbeitsgeschwindigkeit ist hierbei durch das Sternrad und die abrupte Änderung der Bewegungsrichtung beim Absetzen der Gegenstände auf einem der zweiten Transportbänder beschränkt.

Aus der DE-A 2 358 185 ist eine Vorrichtung bekannt, bei der die Gegenstände auf dem ersten Transportband mittels Stößeln querversetzt werden, die mit dem ersten Transportband mitlaufen und durch eine Kulissensteuerung in Querrichtung ausgefahren werden. Die Gegenstände werden dann durch Führungsgeländer, die unterschiedlich weit über das erste Transportband ragen, auf verschiedene zweite Transportbänder weitergeleitet. Wegen der mitlaufenden Stößel und der Kulissensteuerung ist die Arbeitsgeschwindigkeit beschränkt. In Transportrichtung des ersten Transportbandes besteht außerdem ein großer Platzbedarf. Für ein getrenntes Aussortieren der Gegenstände ist es ferner erforderlich, daß die Gegenstände einen erheblichen Mindestabstand voneinander besitzen.

Der Erfindung liegt die Aufgabe zugrunde, eine Vorrichtung zum Steuern des Transportweges von Gegenständen zu schaffen, die in Transportrichtung des bzw. der zweiten Transportbänder einen geringen Platzbedarf hat und sehr hohe Transportgeschwindigkeiten ermöglicht.

Diese Aufgabe wird dadurch gelöst, daß das erste Transportband schräg über das bzw. die zweiten Transportbänder und auf diesen aufliegend verläuft und ein genügend dünnes Band ist, so daß die Gegenstände ohne die Gefahr eines Umkippens von dem ersten Transportband auf das bzw. die zweiten Transportbänder gleiten können, un daß die Ablenkelemente auf der entgegen der Förderrichtung des bzw. der zweiten Transportbänder zeigenden Seite des ersten Transportbandes angeordnet sind, so daß sie im eingefahrenen Zustand die Gegenstände auf dem ersten Transportband passieren lassen, und in Transportrichtung des bzw. der zweiten Transportbänder ausfahrbar sind.

Das das erste Transportband bildende Band kann ein Stahl-oder Kunststoffband sein. Vorzugsweise ist es ein Stahlband einer Stärke zwischen 0,1 und 0,5 mm. Getränkeflaschen können z.B. von einem derartigen Stahlband ohne Schwierigkeiten auf ein zweites Transportband von den Ablenkelementen heruntergeschoben werden.

Im allgemeinen ist eine Mehrzahl zweiter Transportbänder vorgesehen, um z.B. die nach Merkmalen sortierten Flaschen zu verschiedenen Weiterbehandlungseinrichtungen befördern zu können. Es ist jedoch auch möglich, nur ein einziges zweites Transportband zu verwenden, das besonders breit ist, wobei die abgelenkten Gegenstände dann z.B. nach Merkmalen sortiert an unterschiedlichen Stellen der Breite des zweiten Transportbandes positioniert werden. Werden mehrere zweite Transportbänder verwendet, so handelt es sich hierbei zweckmäßig um übliche Gliederketten-Transportbänder. Wird nur ein einziges zweites Transportband verwendet, so ist hierfür z.B. ein breites Stahlband geeignet. Nachfolgend wird jeweils der Fall einer Mehrzahl von zweiten Transportbändern betrachtet. Dies ist jedoch so zu verstehen, daß stattdessen auch ein einziges, besonders breites zweites Transportband verwendet werden kann.

Je höher die Geschwindigkeiten des ersten und der zweiten Transportbänder sind, desto kleiner soll der Winkel zwischen diesen Transportbändern sein. Überraschenderweise lassen sich jedoch auch bereits mit einem Winkel von 45° für Getränkeflaschen sehr hohe Geschwindigkeiten von z.B. 1 m/sec erreichen.

Das erste Transportband ist vorzugsweise ein auf einer endlosen Bahn geführtes Band, wobei die Rückführung vorzugsweise im Abstand oberhalb der zweiten Transportbänder erfolgt. Dies ist aus konstruktiven Gründen zweckmäßig, da sonst die zweiten Transportbänder von dem Band umschlossen würden. Zweckmäßig ist es dabei so, daß die Gegenstände, z.B. die Getränkeflaschen unmittelbar neben der Merhzahl von zweiten Transportbändern von einer vorgeschalteten Transporteinrichtung auf das erste Transportband übergesetzt werden.

Als Ablenkelemente können praktisch alle bislang bekannten Systeme vom einzylindrigen Ausstoßer - Pusher - über Blasdüsen, ausschwenkbare Klappen bis hin zu aufwendigen Systemen - wie mitlaufende Stößel - oder die in der EP-A-3111 beschriebene aus Ablenksegmenten aufgebaute Weiche benutzt werden.

Bei instabileren Gegenständen, z.B. Getränkeflaschen, die unmittelbar aufeinanderfolgen, ist als Ablenkeinrichtung eine Segmentweiche nach der EP-A-3111 zweckmäßig, wobei in ausgefahrenem Zustand der Ablenksegmente die Ablenkkurve einen stetigen und möglichst glatten Übergang vom ersten auf eines der zweiten Transportbänder bildet.

Abhängig von der Standfestigkeit der zu transportierenden Gegenstände und den Gleiteigenschaften der verwendeten Transportbänder ist es auch möglich, die von den Ablenksegmenten gebildete Ablenkkurve nicht genau in Fahrtrichtung der zweiten Transporteinrichtung enden zu lassen, sondern flacher auszulegen. Dadurch kann entweder die Anzahl der Ablenksegmente verkleinert werden oder es ergibt sich die Möglichkeit, durch wechselweises Ausfahren der letzten Ablenksegmente die Ablenkkurve abwechselnd steiler und flacher zu gestalten und so die Gegenstände auf die zweiten Transportbänder zu verteilen. Dies ist von besonderem Interesse, wenn die Geschwindigkeit der zweiten Transportbänder kleiner ist als die des ersten Transportbandes. Ein Verteilen der Gegenstände auf die zweiten Transportbänder läßt sich auch mit einem Ausstoßer erreichen, dessen Ausfahrlänge oder Ausstoßkräfte variiert ist.

Wie in der EP-B 19 117 in Verbindung mit den dortigen Figuren 3 und 4 beschrieben ist, kann bei Ablenkeinrichtungen, die aus mehreren einzelnen ausfahrbaren Segmenten aufgebaut sind, der Ablenkimpuls dadurch in seiner Stärke variiert werden, daß die Anzahl der zu einem Ablenkvorgang eingesetzten Segmente verändert wird. Werden von insgesamt z.B. zehn zu einem Ablenkelement gehörenden Ablenksegmenten nur die ersten sieben ausgefahren, so ist der Ablenkimpuls schwächer und der Ablenkwinkel kleiner als wenn alle zehn Ablenksegmente eingesetzt werden. Bei Blasdüsen als Ablenkelementen kann der gleiche Effekt durch Variierung der Anzahl der aktivierten Blasdüsen oder deren Intensität erreicht werden. Bei Verwendung einer Ablenkklappe (DE-A-2 728 478) läßt sich der gleiche Effekt dadurch erreichen, daß die Ablenkklappe unterschiedlich weit ausgeschwenkt wird. Bei der erfindungsgemäßen Vorrichtung ergibt sich dadurch die Möglichkeit, ein einziges Ablenkelement mehreren z.B. drei zweiten Transportbändern zuzuordnen, wobei es dann bei Ablenkelementen mit einer Mehrzahl ausfahrbarer Ablenksegmente von der Anzahl der eingesetzten Ablenksegmente abhängt, auf welcher der drei zweiten Transportbänder die Gegenstände angelangen und weitertransportiert werden.

Daß sich mit der erfindungsgemäßen Vorrichtung sehr hohe Arbeitsgeschwindigkeiten erreichen lassen, und zwar auch bei Ablenkung der Gegenstände von dem ersten Transportband in einer relativ stark gekrümmten Kurve auf eines der zweiten Transportbänder, ist überraschend.

Die Arbeitsgeschwindigkeit ist besonders hoch im Vergleich zu Ablenkvorrichtungen, bei denen die Gegenstände von einem ersten Transportband auf ein dazu parallel verlaufendes zweites Transportband abgelenkt werden. Dies ist vermutlich darauf zurückzuführen, daß bei parallel verlaufenden ersten und zweiten Transportbändern die abzulenkenden Gegenstände eine S-Kurve beschreiben, d.h., zunächst z.B. eine Linkskurve und dann eine Rechtskurve, so daß sie wieder die ursprüngliche Bewegungsrichtung innehaben und lediglich entsprechend dem Abstand der beiden Transportbänder parallel versetzt weitertransportiert werden. Offenbar ist die Gefahr eines Umkippens z.B. von Getränkeflaschen dann besonders hoch, wenn diese Flaschen auf einer derartigen S-förmigen Bahn befördert werden. Bei der erfindungsgemäßen Vorrichtung erfolgt die Ablenkung der Gegenstände von dem ersten Transportband auf eines der zweiten Transportbänder jedoch in einer einzigen, glatten, kurvenförmigen Bahn mit Krümmung in einer einzigen Richtung.

Die Gefahr eines Umkippens instabiler Gegenstände kann dadurch weiter verringert werden, daß die Gegenstände so auf dem ersten Transportband positioniert werden, daß ihr Schwerpunkt gerade noch über dem Rand des ersten Transportbandes liegt. Die Gegenstände sind also so weit auf dem ersten Transportband in Richtung der Bewegung der zweiten Transportbänder verschoben, daß sie gerade noch sicher auf dem ersten Transportband stehen. Es ist dann nur noch ein relativ kleiner Ablenkimpuls durch die Ablenkelemente erforderlich, um die Gegenstände so weit in Bewegungsrichtung der zweiten Transportbänder zu verschieben, daß die Gegenstände Berührung mit den zweiten Transportbändern haben. Sobald dies der Fall ist, werden die Gegenstände von dem ersten Transportband heruntergezogen und dann von dem betreffenden der zweiten Transportbänder weiterbefördert.

Ausführungsbeispiele der Erfindung werden nachfolgend anhand der Zeichnung erläutert. Es zeigen:

Fig. 1 die Transportwegsteuervorrichtung in Draufsicht;

Fig. 2 eine Transportwegsteuervorrichtung ähnlich der von Figur 2 jedoch mit Blasdüsen als Ablenkelemente und

Fig. 3 die Führung des ersten Transportbandes.

Die erfindungsgemäße Vorrichtung wird nachfolgend anhand einer Vorrichtung zum Sortieren von Getränkeflaschen erläutert. Die Erfindung ist jedoch auch in Verbindung mit Sortiervorrichtungen für andere Gegenstände, z.B. Postpakete, Konservendosen und dergl. einsetzbar.

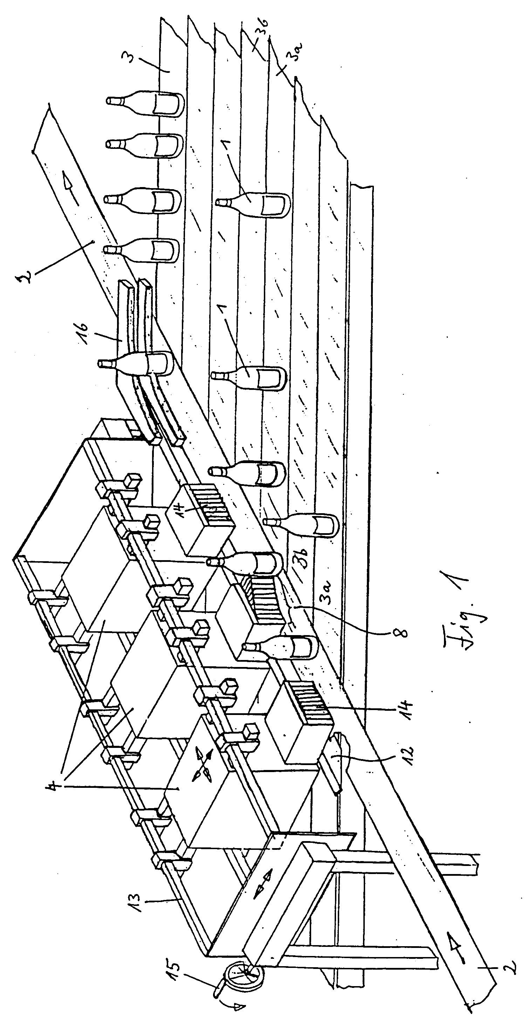

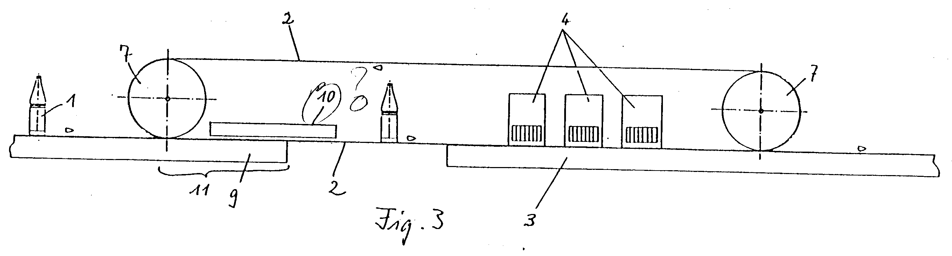

Bei dem Ausführungsbeispiel von Fig. 1 sind also Getränkeflaschen 1 die zu sortierenden Gegenstände. Die Flaschen 1 werden auf einem ersten Transportband 2 herangeführt. Das erste Transportband 2 wird von einem endlosen, 0,3 mm starken Stahlband gebildet, das über zwei Rollen 7 auf einer geschlossenen Bahn geführt wird (Fig. 3).

Das erste Transportband 2 gleitet unter einem Winkel von etwa 45° schräg über eine Mehrzahl parallel nebeneinanderliegender zweiter Transportbänder 3. Die Sortierung der Flaschen 1 erfolgt so, daß jede Flasche auf ein bestimmtes, dieser zweiten Transportbänder 3 abgelenkt und von diesem dann weiterbefördert wird. Bei den zweiten Transportbändern 3 handelt es sich um Gliederketten-Transportbänder, wie sie allgemein für den Transport von Getränkeflaschen verwendet werden.

Die Ablenkelemente 4 weisen jeweils eine Mehrzahl einzeln ausfahrbarer Ablenksegmente 14 auf, die im ausgefahrenen Zustand die Flaschen 1 von dem ersten Transportband 2 auf eines der zweiten Transportbänder 3 hinunterschieben. Die vorderen Enden der Ablenksegmente 14 bilden im ausgefahrenen Zustand eine kontinuierliche, gekrümmte Ablenkfläche 8, die eine gleichförmige und allmähliche Ablenkung der Flaschen 1 bewirkt. Für jeweils zwei der zweiten Transportbänder 3 ist dabei ein Ablenkelement 4 vorgesehen. Werden bei einem Ablenkvorgang alle Ablenksegmente 14 eingesetzt, so ist die Ablenkung stärker und werden die Flaschen 1 auf das zweite Transportband 3a abgelenkt. Werden die letzten zwei Ablenksegmente 14 dagegen nicht eingesetzt, so werden die Flaschen 1 auf das zweite Transportband 3b abgelenkt. Sobald die Flaschen 1 soweit von dem ersten Transportband 2 heruntergeschoben sind, daß sie auf dem zweiten Transportband 3 zu stehen kommen, werden sie von diesem erfaßt und in Figur 1 nach rechts weitertransportiert. Die Ablenkflächen 8 haben zweckmäßig einen reibungsmindernden Belag, damit die Flaschen 1 nur umgelenkt, jedoch möglichst wenig abgebremst werden. Die höchsten Arbeitsgeschwindigkeiten sind dabei erreichbar, wenn die Geschwindigkeit des ersten Transportbandes 2 in einem Bereich liegt, der zwischen dem Einfachen und dem Doppelten der Geschwindigkeit der zweiten Transportbänder 3 liegt.

Die Ablenkelemente 4 und deren Ablenkflächen 8 müssen dabei nicht die gesamte Breite des ersten Transportbandes 2 überspannen. Insbesondere bei hohen Transportgeschwindigkeiten genügt es, wenn den Flaschen 1 ein Impuls in Richtung der zweiten Transportbänder 3 erteilt wird.

Bei hohen Transportgeschwindigkeiten von z.B. 1 m/sec. reicht dieser Impuls aus, damit die Flaschen 1 aufgrund ihrer Massenträgheit einen Teil des Weges von dem ersten Transportband 2 auf eines der zweiten Transportbänder 3 alleine zurücklegen. Bei normalen Getränkeflaschen von 0,7 l Inhalt und etwa 7 cm Durchmesser genügt es bei einer Transportgeschwindigkeit von 1 m/s und einer Breite des ersten Transportbandes 2 von 15 cm, wenn die Ablenkelemente 4 im ausgefahrenen Zustand die halbe Breite des ersten Transportbandes 2 überstreichen. Wenn die Flaschen 1 etwa in der Mitte des ersten Transportbandes 2 stehen, werden sie um 3,5 cm abgelenkt und erhalten einen ausreichend hohen Impuls, damit sie aufgrund ihrer Massenträgheit die restliche Entfernung von 7,5 cm frei zurücklegen und dann auf einem der zweiten Transportbänder 3 zu stehen kommen. Da die Flaschen 1 bei diesem Ablenkvorgang zwangsläufig auch etwas abgebremst werden, ist es zweckmäßig, die Geschwindigkeit des ersten Transportbandes 2 um so viel höher zu wählen als die der zweiten Transportbänder 3, daß die Flaschen 1 möglichst genau die Geschwindigkeit der zweiten Transportbänder 3 haben, wenn sie auf diesen zu stehen kommen.

Außerhalb der zweiten Transportbänder 3 ist das erste Transportband 2 durch eine Vielzahl von Rollen oder durch Gleitlager geführt (Fig. 3). Bei einem dünnen Stahlband als erstem Transportband 2 sind die Gleitlager vorzugsweise aus Kunststoff, z.B. PTFE. Zur Vermeidung einer Verletzungsgefahr für die Bedienungspersonen sind die Ränder des Stahlbandes durch die Führung oder ein zusätzliches Gitter abgedeckt. Das Stahlband läuft über seitliche Rollen 7, die über der Ebene der zweiten Transportbänder 3 angeordnet sind, so daß der untere, in der einen Richtung laufende Teil des Stahlbandes, dessen Bewegungsrichtung einen spitzen Winkel mit der Transportrichtung der zweiten Transportbänder 3 einschließt, als erstes Transportband 2 dient, während der zurücklaufende Teil in einem dem Durchmesser der Rollen 7 entsprechenden Abstand über dieser Ebene zurückläuft. Das erste Transportband 2 kann an sich eine beliebige Länge haben. Da es in der Konstruktion jedoch von üblichen Transportbändern, z.B. Gliederkettenförderern, abweicht, hat es zweckmäßig nur eine möglichst kurze Länge, d.h., die Rollen 7 sind in geringem Abstand neben der Mehrzahl von zweiten Transportbändern 3 angeordnet.

Bei der in der Zeichnung dargestellten Ausführungsform ist die vorgeschaltete Transporteinrichtung ein üblicher Gliederkettenförderer 9, dessen Ende einen kurzen Bereich 11 parallel zum Anfang des ersten Transportbandes 2 und unmittelbar neben diesem verläuft. Innerhalb dieses Bereichs werden die Flaschen 1 durch ein einfaches Geländer 10 von dem Gliederkettenförder 9 auf das erste Transportband 2 geschoben.

An dem Rand des ersten Transportbandes 2, der entgegen der Transportrichtung der beiden Transportbänder 3 zeigt, tritt ein besonders hoher Verschleiß auf, da hier eventuelle Unebenheiten oder gar hervorstehende Teile der zweiten Transportbänder 3 gegen das erste Transportband 2 stoßen. Diese Seite des ersten Transportbandes 2 wird daher zweckmäßig durch eine Schiene 12 geschützt, die sich über die gesamte Breite der Mehrzahl von zweiten Transportbändern 3 erstreckt und sich wie eine Führungslippe von oben in einer Breite von z.B. 2 cm unter diese Seite des ersten Transportbandes 2 erstreckt. Unebenheiten oder kleinere, auf einem der zweiten Transportbänder 3 liegende Gegenstände werden durch die Schiene 12 nach unten gedrückt, bzw. der Rand des ersten Transportbandes 2 wird von der nach oben gedrückten Schiene 12 angehoben, so daß zumindest der Rand des ersten Transportbandes 2 nicht beschädigt wird. Daß diese Gegenstände oder Unebenheiten dann unter dem zweiten Transportband 2 hindurchgleiten, führt zwar zu Kratzern und einem besonders starken lokalen Verschleiß des ersten Transportbandes 2, führt jedoch nicht zu einer so starken Beschädigung des ersten Transportbandes 2, daß der Betrieb der Sortiervorrichtung unterbrochen wird.

In Fig. 1 sind insgesamt acht zweite Transportbänder 3 dargestellt. Drei Ablenkelemente 4 werden von einem Rahmen 13 gehalten werden. Durch geeignete Mittel sind die Ablenkelemente 4 verschiebbar gegenüber dem Rahmen 13 gehalten. Der Rahmen 13 ist außerdem als Einheit mittels eines Handrades 15 senkrecht zum ersten Transportband 2 verschiebbar. Die Ablenkelemente 4 sind jeweils zwei der zweiten Transportbänder 3 zugeordnet. Mittels einer stationären Ablenkkurve 16 werden diejenigen Flaschen, die von keinem der Ablenkelemente 4 auf eines der zweiten Transportbänder 3 geschoben wurde, auf das letzte der zweiten Transportbänder 3 abgelenkt.

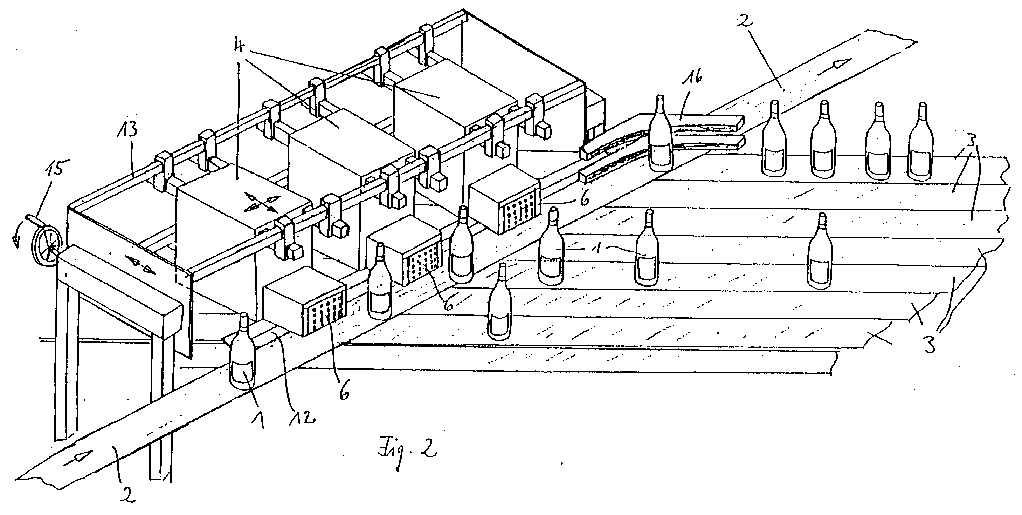

Fig. 2 zeigt eine Ausführungsform ähnlich der von Fig. 1, wobei jedoch die Ablenkelemente 4 Blasdüsen 6 aufweisen. Durch Steuerung der Intensität und der Anzahl der Blasdüsen 6 jedes Ablenkelementes 4 werden die Flaschen 1 auf unterschiedliche der zweiten Transportbänder 3 abgelenkt. Die Blasdüsen 6 werden entsprechend der Position und/oder der Geschwindigkeit der abzulenkenden Flaschen 1 oder ausgehend von ihrem Gewicht nach Erfahrungswerten gesteuert, wie es aus der EP-A-29614 bekannt ist.

**Patentansprüche**

1. Vorrichtung zum Steuern des Transportweges von Gegenständen (1),
mit einem ersten, endlosen Transportband (2), das auf einer geschlossenen Bahn geführt wird und auf dem die Gegenstände (1) zugeführt werden,
mit mehreren zweiten Transportbändern (3), die die Gegenstände (1) weiterbefördern, wobei das erste Transportband (2) schräg zur Längsrichtung der zweiten Transportbänder (3) und auf diesen aufliegend verläuft und ein Band so geringer Stärke ist, daß die Gegenstände (1) ohne die Gefahr eines Umkippens von dem ersten Transportband (2) auf die zweiten Transportbänder (3) gleiten können,
mit mehreren Ablenkelementen (4) zum Ablenken der Gegenstände (1) von dem ersten Transportband (2) auf eines der Zweiten Transportbänder (3), wobei die Ablenkelemente (4) auf der entgegen der Förderrichtung der zweiten Transportbänder (3) zeigenden Seite des ersten Transportbandes (2) angeordnet sind,
dadurch **gekennzeichnet,**
daß das erste Transportband (2) so auf der geschlossenen Bahn geführt wird, daß es im Abstand über den zweiten Transportbändern (3) zurückgeführt wird,
daß die zweiten Transportbänder (3) parallel nebeneinander angeordnet sind und
daß das erste Transportband (2) mit seiner gesamten Breite über den zweiten Transportbändern(3) verläuft und auf diesen aufliegt.

2. Vorrichtung nach Anspruch 1, dadurch **gekennzeichnet,** daß das erste Transportband (2) ein Stahlband einer Stärke zwischen 0,1 und 0,5 mm ist.

3. Vorrichtung nach Anspruch 1 oder 2, dadurch **gekennzeichnet,** daß das erste Transportband (2) unter einem Winkel von 30° bis 60° zu dem bzw. den zweiten Transportbändern (3) angeordnet ist.

4. Vorrichtung nach einem der Ansprüche 1 bis 3, dadurch **gekennzeichnet,** daß die Ablenkelemente (4) aus mehreren einzeln ein- und ausfahrbaren Segmenten (5) aufgebaut sind, die im eingefahrenen Zustand die Gegenstände (1) auf dem ersten Transportband (2) passieren lassen und in Förderrichtung des bzw. der zweiten Transportbänder (3) ausfahrbar sind.

5. Vorrichtung nach einem der Ansprüche 1 bis 4, dadurch **gekennzeichnet,** daß die Ablenkelemente durch eine oder mehrere Blasdüsen (6) gebildet werden.

## Claims

1. Apparatus for controlling the path of transportation of articles (1)
comprising a first endless conveyor belt (2) which is guided along a closed path and delivers the articles (1),
several second conveyor belts (3) which continue the conveyance of the articles (1), the first conveyor belt (2) extending obliquely across and resting on the second conveyor belts (3) and being a belt of such small thickness that the articles (1) can slide from the first conveyor belt (2) onto the second conveyor belts (3) without the risk of toppling over,
several deflecting means (4) for deflecting the articles (1) from the first conveyor belt (2) onto one of the second conveyor belts (3), the deflecting means (4) being arranged on the side of the first conveyor belt (2) facing away from the direction of conveyance of the second conveyor belts (3),
**characterized**
in that the first conveyor belt (2) is guided along the closed path in such manner that it is returned in spaced relation above the second conveyor belts (3),
in that the second conveyor belts (3) are arranged in parallel side by side relationship and in that the first conveyor belt (2), with its total width, extends across and rests on the second conveyor belts (3).

2. Apparatus according to claim 1, **characterized** in that the first conveyor belt (2) is a steel belt having a thickness between 0.1 and 0.5 mm.

3. Apparatus according to claims 1 or 2, **characterized** in that the first conveyor belt (2) is arranged at an angle of 30° to 60° with respect to the second conveyor belt or, respectively, belts (3).

4. Apparatus according to one of claims 1 to 3, **characterized** in that the deflecting means (4) are composed of several individually retractable and extensible segments (5) which, in retracted condition, allow the articles (1) to pass on the first conveyor belt (2) and which are extensible in conveying direction of the second conveyor belt or, respectively, belts (3).

5. Apparatus according to one of claims 1 to 4, **characterized** in that the deflecting means are one or several blow nozzles (6).

## Revendications

1. Dispositif de commande du trajet de transport d'objets (1), comportant :
une première bande transporteuse sans fin (2) qui est guidée sur une trajectoire fermée et sur laquelle les objets (1) sont amenés;
plusieurs deuxièmes bandes transporteuses (3) qui assurent la suite de l'acheminement des objets (1), la première bande transporteuse (2) s'étendant obliquement par rapport à la direction longitudinale des deuxièmes bandes transporteuses (3) sur lesquelles elle s'applique et étant une bande si peu épaisse que les objets (1) puissent glisser hors d'elle (2) jusque sur les deuxièmes bandes transporteuses (3) sans risque d'être renversés;
plusieurs éléments de déviation (4) pour faire dévier les objets (1) de la première bande transporteuse (2) vers et sur l'une des deuxièmes bandes transporteuses (3), ces éléments de déviation (4) étant agencés sur le côté de la première bande transporteuse (2) tourné à l'encontre de la direction de transport des deuxièmes bandes transporteuses (3);
caractérisé
par le fait que la première bande transporteuse (2) est guidée sur la trajectoire fermée de manière que son brin de retour soit à distance au-dessus des deuxièmes bandes transporteuses (3),
par le fait que les deuxièmes bandes transporteuses (3) sont agencées côte à côte, parallèlement les unes aux autres; et

par le fait que la première bande transporteuse (2) s'étend par toute sa largeur par-dessus les deuxièmes bandes transporteuses (3) sur lesquelles elle s'applique.

2. Dispositif selon revendication 1, caractérisé par le fait que la première bande transporteuse (2) est une bande d'acier d'une épaisseur comprise entre 0,1 et 0,5 mm.

3. Dispositif selon revendication 1 ou 2, caractérisé par le fait que la première bande transporteuse (2) est agencée sous un angle de 30° à 60° par rapport à la ou les deuxième(s) bande(s) transporteuse(s) (3).

4. Dispositif selon l'une des revendications 1 à 3, caractérisé par le fait que les éléments de déviation (4) sont constitués de plusieurs segments individuels (5) pouvant être déployés et rétractés, lesquels, lorsqu'ils sont à l'état rétracté, laissent passer les objets (1) sur la première bande transporteuse (2) et peuvent être déployés dans la direction du transport de la ou des deuxième(s) bande(s) transporteuse(s) (3).

5. Dispositif selon l'une des revendications 1 à 4, caractérisé par le fait que les éléments de déviation sont constitués par un ou plusieurs gicleurs de soufflage (6).

Fig. 1

Fig. 2

EP 0 286 080 B1

Fig. 3